# EUROPÄISCHE PATENTANMELDUNG

(11) **EP 1 255 104 A1**
(43) Veröffentlichungstag der Anmeldung: **06.11.2002**
(21) Anmeldenummer: 01810427.3
(22) Anmeldetag: 30.04.2001
(51) Int. Cl.: G01N 15/08, G01N 27/12

(54) **Vorrichtung zur Messung der Dampfdurchlässigkeit eines flächigen Produktes**

(71) Anmelder: Lyssy, Georges H., Dr., CH-8702 Zollikon (CH)
(72) Erfinder: Lyssy, Georges H., Dr., CH-8702 Zollikon (CH)
(74) Vertreter: Patentanwälte Feldmann & Partner AG

(57) **Zusammenfassung**

Die Vorrichtung (1) zur Messung der Dampfdurchlässigkeit einer Folie oder Membran (9) beinhaltet eine zweiteilige Messkammer (2) mit Haltemitteln (23-25) zur dichtenden Halterung der Folie (9). Die Haltemittel (23-25) sind derart gestaltet, dass die gehaltene Folie (9) eine ebene Trennfläche (90) zwischen einem ersten Messkammerteil (21) und einem zweiten Messkammerteil (22) definiert. Der erste Messkammerteil (21) ist zur Aufnahme einer Flüssigkeit (31) ausgebildet, und der zweite Messkammerteil (22) weist Mittel zum Einlass (71, 73) und Auslass (72) eines Trägergases auf. Ein Dampffühler (6) mit einer eben ausgebildeten aktiven Fläche (62) ist im zweiten Messkammerteil (22) angebracht. Die aktive Fläche (62) liegt parallel zur und in unmittelbarer Nähe (d) der Trennfläche (90) und ist vergleichbar gross ist wie diese Trennfläche (90). Der zweite Messkammerteil (22) weist eine kleine Höhe (h) auf. Das Ausgangssignal ist zur an der Probe (9) angelegten Konzentrationsdifferenz proportional, und schnelle Konzentrationsänderungen können erfasst werden.

## Beschreibung

Die vorliegende Erfindung betrifft eine Vorrichtung zur Messung der Dampfdurchlässigkeit eines flächigen Produktes wie bspw. einer Folie oder Membran, gemäss dem Oberbegriff des ersten Patentanspruchs.

Verfahren und Vorrichtungen zur Messung der Gasdurchlässigkeit von flächigen Produkten oder Hohlkörpern sind bekannt und werden auf dem Markt angeboten. Ein solches Verfahren ist bspw. in der DIN-Norm 53380 vom Juni 1969 oder in der Norm ISO/DIN 2556 festgelegt. Dabei wird die auszumessende Probe derart in einer Messkammer befestigt, dass es eine Trennwand zwischen zwei Messkammerteilen bildet. Eine erste Seite der Probe wird einem Probegas unter atmosphärischem oder geringem Überdruck in einem ersten Messkammerteil ausgesetzt, während in einem zweiten Messkammerteil, dem eine zweite Seite der Probe zugewandt ist, Unterdruck herrscht. Je nach Durchlässigkeit der Probe wird der Unterdruck im zweiten Messkammerteil mehr oder weniger schnell aufgefüllt, wobei der Druckanstieg in Funktion der Zeit ein Massstab für die Durchlässigkeit der Probe ist.

In der US-4,548,072 wird eine entsprechende Vorrichtung offenbart, welche zur Messung der Wasserdampfdurchlässigkeit von Textilien dient. Der erste Messkammerteil ist ein Gefäss, welches teilweise mit Wasser gefüllt ist. Eine Textilprobe wird derart zwischen zwei porösen Platten eingeklemmt, dass sie das Gefäss gegen oben abschliesst. Der zweite Messkammerteil ist als Durchlaufkammer mit einem Einlass und einem Auslass für ein inertes Trägergas ausgebildet. Der Auslass mündet in eine Verbindungsleitung, welche zu einem Feuchtefühler führt. Der Feuchtefühler kann eine kommerziell erhältliche, auf der dynamischen Messung einer elektrischen Widerstands- oder Kapazitätsänderung beruhende Feuchtesonde beinhalten. Wasserdampf tritt aus dem Gefäss durch die Textilprobe hindurch, wird vom Trägergas zum Feuchtefühler transportiert und von diesem detektiert.

Gemäss der oben beschriebenen Lehre werden also auf beiden Seiten der Textilprobe verschiedene relative Feuchten angelegt. Dabei ist die Feuchtedifferenz als treibende Kraft proportional zur durch die Textilprobe durchgetretene Dampfmenge, nicht aber proportional zum vom Feuchtefühler abgegebenen Messsignal (Wasserdampfpartialdruck, relative Feuchte etc.). Eine Ursache dafür liegt im bisher üblichen, oben beschriebenen Messaufbau. Oft ist nicht gewährleistet, dass sich der durch die Textilprobe durchgetretene Dampf homogen auf das Volumen des zweiten Messkammerteils verteilt; dasselbe gilt für das durch den zweiten Messkammerteil durchströmende Trägergas. Unter solchen Umständen gelangt eine Dampfmenge zum Feuchtefühler, welche nicht unbedingt der Dampfdurchlässigkeit der Textilprobe entspricht, was zu Messfehlern führt.

Ausserdem haben resistive oder kapazitive Feuchtefühler meist eine sehr unlineare Charakteristik. Bei niedrigen Feuchten ist die Widerstands- bzw. Kapazitätsänderung pro Feuchteeinheit (z. B. Prozent relativer Feuchte) meist sehr hoch, bei hohen Feuchten eher tief; mit anderen Worten: Die Empfindlichkeit (erste Ableitung des Messsignals nach der gemessenen Grösse) nimmt mit zunehmender Feuchte betragsmässig ab. Dies macht die Auswertung aufwändig.

Meist weisen Feuchtefühler eine Hysterese auf. Dies bedeutet, dass ihr Widerstand bzw. ihre Kapazität für einen gegebenen Wasserdampf-Partialdruck davon abhängt, ob dieser Partialdruck von einem höheren oder einem tieferen Wert her erreicht wurde. Diese Abhängigkeit des Messsignals von der Vorgeschichte kann bei dynamischen Messungen Fehler hervorrufen. Dasselbe gilt auch für träge Feuchtefühler, die der Dynamik nicht folgen können.

Es ist daher Aufgabe der Erfindung, eine Vorrichtung zur Messung von Dampfdurchlässigkeit eines flächigen Produktes zu schaffen, welche die obigen Nachteile möglichst vermeidet. Insbesondere soll das Ausgangssignal zur an der Probe angelegten Konzentrationsdifferenz proportional sein, und schnelle Konzentrationsänderungen sollen erfasst werden können. Die Aufgabe wird durch die im ersten Patentanspruch definierte Erfindung gelöst. Weiter ist wünschenswert, dass das Ausgangssignal keine Hysterese aufweist und die Empfindlichkeit annähernd konstant ist. Diese Aufgabe wird durch die in den abhängigen Ansprüchen definierten vorteilhaften Ausführungsformen gelöst.

Ohne Einschränkung der Allgemeinheit wird in diesem Dokument auf die beispielhafte Anwendung der Wasserdampfmessung eingegangen. Selbstverständlich bezieht sich die Erfindung auch auf andere analoge Anwendungen, in denen die der Probe Durchlässigkeit bezüglich der Dämpfe anderer Stoffe als von Wasser bestimmt werden soll.

Die Erfindung beruht auf der Idee, einen Dampffühler mit einer eben ausgebildeten aktiven Fläche im zweiten Messkammerteil anzubringen, welche aktive Fläche parallel zur und in unmittelbarer Nähe der Trennfläche zwischen den beiden Messkammerteilen liegt und vergleichbar gross ist wie diese Trennfläche. Die Höhe des zweiten Messkammerteils, gemessen von einem beliebigen Punkt der Trennfläche aus senkrecht zur Trennfläche, ist wesentlich kleiner als die Ausdehnung der Trennfläche.

Der Dampffühler ist in einer möglichst kleinen Entfernung zur Probe angeordnet. So wird sichergestellt, dass der tatsächlich durch die Probe hindurchgetretene Dampf gemessen wird, das Messsignal charakteristisch für die Dampfdurchlässigkeit der Probe ist und auch präzise dynamische Messungen durchgeführt werden können. Der maximal zulässige Abstand zwischen dem Dampffühler und der Probe ist durch die Forderung gegeben, dass der Fühler in einer annähernd homogenen Atmosphäre angebracht sein muss. Experimente haben gezeigt, dass sich über der Probe eine im Wesentlichen homogene Luftschicht bildet, deren Höhe von der Temperatur abhängt. Bei 23 °C beträgt die Schichthöhe ca. 5 mm, bei 38 °C ca. 10 mm.; dies sind die maximal zulässigen Abstände zwischen dem Dampffühler und der Probe bei den entsprechenden Temperaturen. Maximal zulässige Abstände für andere Temperaturen können bei Unkenntnis der entsprechenden experimentellen Werte durch Interpolation bzw. Extrapolation der obigen Werte näherungsweise ermittelt werden.

Der zweite Messkammerteil soll gemäss der Erfindung eine möglichst geringe Höhe aufweisen. Die maximale Höhe des zweiten Messkammerteils ist durch die Forderung gegeben, dass der Widerstand der ruhigen Luft im zweiten Messkammerteil bezüglich des zu messenden Dampfes wesentlich kleiner sein muss als der Widerstand der Probe. Mit anderen Worten: Die Luft im zweiten Messkammerteil soll nicht mit der Probe konkurrieren bzw. die Messung beeinflussen. Diese Forderung ist zwar abhängig von den Eigenschaften der Probe; in den meisten Fällen ist sie aber erfüllt, wenn die Höhe des zweiten Messkammerteils wesentlich kleiner, bspw. fünf- bis zwanzigmal kleiner ist als seine Ausdehnung in Längsrichtung. Auf diese Weise verteilt sich die durch die Probe durchgetretene Dampfmenge homogen in einem kleinen Volumen. Dies hat zur Folge, dass schon eine geringe Menge Dampf eine grosse Änderung des Messsignals hervorruft.

Die erfindungsgemässe Anordnung des Dampffühlers in einem Messkammerteil geringer Höhe in unmittelbarer Nähe der Probe kann unter Umständen eine Verwendung kommerziell erhältlicher Dampffühler verunmöglichen. Dies ist nur ein scheinbarer Nachteil. Die Erfindung erlaubt nebst den oben erwähnten Vorteilen eine Reduktion der Abmessungen der Vorrichtung. Sie gewährt eine grosse Freiheit bei der Gestaltung der Vorrichtung, indem sich ein Einbau eines kommerziellen Dampffühlers und eine Konstruktion einer entsprechenden Zuund Wegleitung erübrigt.

Dank der integrierenden Wirkungsweise des Dampffühlers wird eine besonders präzise Messung erzielt, wenn ein grossflächiger Dampffühler verwendet wird, dessen aktive Fläche vergleichbar gross ist wie eine dem Dampffühler zugewandte Probenfläche. "Vergleichbar gross" heisst dabei, dass sich die beiden Flächen um höchstens einen Faktor von ca. 2 unterscheiden. Vorzugsweise ist die aktive Fläche des Dampffühlers im Wesentlichen gleich gross ist wie die ihm zugewandte Probenfläche. Die Probenfläche beträgt gemäss den meisten Normen 50 cm².

In einer bevorzugten Ausführungsform zur Wasserdampfmessung basiert der Feuchtefühler auf einem flächigen, elektrisch nicht leitendem Substrat, auf dessen Oberfläche zwei Elektroden derart aufgebracht sind, dass ihre einander zugewandten Flächen möglichst gross sind und einen möglichst kleinen Abstand aufweisen. Die Elektroden können bspw. die Form ineinander greifender Kämme oder ineinander verwickelter Spiralen aufweisen. Alternativ dazu kann der Feuchtefühler eine auf einem Substrat aufgebrachte sehr dünneAluminiumoxidschicht beinhalten. Die Basis der Aluminiumoxidschicht bildet die eine Elektrode, während die andere Elektrode eine auf die Aluminiumoxidschicht aufgedampfte poröse Metallschicht ist. Die Feuchtigkeitsmessung erfolgt aufgrund der Kapazitätsänderungen in den durch die beiden Elektroden gebildeten Kondensatoren. Mit solchen Feuchtefühlern sind schnelle, hysteresefreie Messungen möglich. Statt mit kapazitiven Feuchtefühlern kann die Feuchtigkeit auch mit resistiven Feuchtefühlern gemessen werden.

Zur Auswertung der Messsignale wird vorzugsweise ein anwenderspezifischer integrierter Schaltkreis (application specific integrated circuit, ASIC) verwendet. Mit einem solchen ASIC können die Messsignale im gesamten Messbereich (z. B. von 0 bis 100 % relativer Feuchte) digital linearisiert werden. Auf diese Weise wird die nichtlineare Charakteristik des Dampffühlers kompensiert und ein gleichbleibendes Signal pro Konzentrationsänderungsinkrement erzeugt. Der gesamte Messbereich oder beliebige Teile davon werden also mit derselben Empfindlichkeit abgedeckt. Auch können beliebige Teilmessbereiche mit gleich bleibendem spezifischen Signal erfasst werden. Dies erlaubt eine vereinfachte Wahl der Prüfbedingungen.

Im ersten Messkammerteil kann sich eine Flüssigkeit mit einer freien Flüssigkeitsoberfläche befinden. Dies kann nachteilig sein. Erstens bildet sich zwischen der Flüssigkeitsoberfläche und der Probe eine ruhende, isolierende Luftschicht. Ist diese zu hoch, so ist nicht mehr gewährleistet, dass die erste Probenseite einer gesättigten Dampfatmosphäre ausgesetzt ist, und das Messresultat wird durch die Entfernung zwischen der Flüssigkeitsoberfläche und der Probe beeinflusst. Bei Bewegungen oder Erschütterungen der Messkammer kann die Flüssigkeit auch direkt mit der Probe in Kontakt kommen, was eine Dampfdurchlässigkeitsmessung verunmöglicht. Um dies zu verhindern, wird vorzugsweise im ersten Messkammerteil ein poröser Körper mit kapillarer Wirkung, bspw. ein Schwamm, Bimsstein, Polyäthylen o. ä., untergebracht. Die Probe sollte nahe der Oberfläche dieses porösen Körpers liegen und darf auch mit dieser in Kontakt sein. Aufgabe des porösen Körpers ist es, die Flüssigkeit durch die Poren möglichst nahe an die Probe heranzuführen, ohne dass aber die Flüssigkeit direkt mit der Probe in Kontakt kommt. Der Fachmann wird, je nach Flüssigkeit, bei Kenntnis der Erfindung die geeignete Porengrösse zu wählen wissen; er wird auch mit Vorteil einen porösen Körper aus einem hydrophoben Material wählen.

Es kann vorteilhaft sein, wenn die erfindungsgemässe Vorrichtung mit Mitteln zur Homogenisierung der vom Dampffühler zu messenden Luft ausgestattet ist. So wird vermieden, dass der Dampffühler kurzzeitig auftretende, untypische Spitzenwerte misst, durch welche das gesamte Messresultat verfälscht werden könnte. Solche Mittel können einerseits als perforierte Abdeckung des Dampffühlers ausgebildet sein, bspw. in Form einer gelochten Folie oder eines Nylongewebes. Sie können andrerseits auch als Mittel zur Beeinflussung der Luftströmung im zweiten Messkammerteil ausgebildet sein, bspw. in Form von Prellplatten im Bereich des Lufteinlasses und des Luftauslasses.

Im Folgenden wird die Erfindung anhand von Ausführungsbeispielen erläutert. Dabei zeigt
- Fig. 1: einen Vertikalschnitt durch eine Ausführungsform der erfindungsgemässen Vorrichtung,
- Fig. 2: einen Querschnitt durch eine Ausführungsform der erfindungsgemässen Vorrichtung und
- Fig. 3 und 4: zwei Draufsichten auf verschiedene Feuchtefühler für die erfindungsgemässe Vorrichtung.

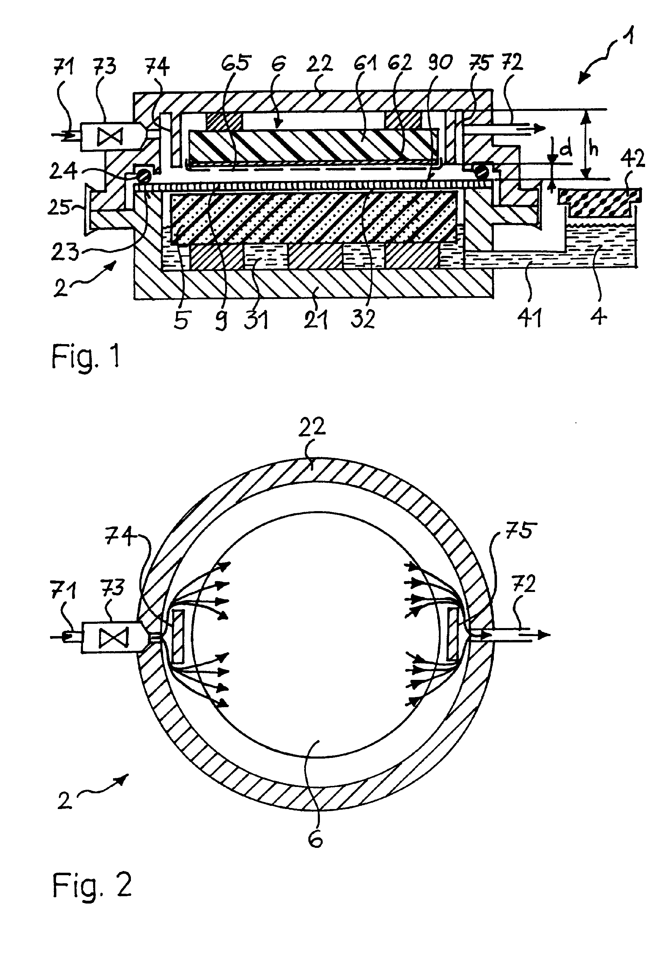

In **Figur 1** ist eine Ausführungsform der erfindungsgemässen Vorrichtung 1 zur Messung von Dampfdurchlässigkeit einer Probe 9 in Form eines flächigen Produktes, bspw. einer Folie oder Membran, in einem Vertikalschnitt dargestellt, in **Figur 2** in einem entsprechender Querschnitt. Die Vorrichtung 1 beinhaltet eine Messkammer 2, welche aus einem ersten Messkammerteil 21 und einem zweiten Messkammerteil 22 besteht. Die beiden Messkammerteile 21, 22 sind derart aufeinander abgestimmt, dass die Probe 9 zwischen ihnen dichtend und klemmend eingespannt werden kann. Der Rand der Probe 9 wird bspw. mittels eines O-Rings 24 gegen eine entsprechende Auflagefläche 23 des ersten Messkammerteils 21 gepresst. Die beiden Messkammerteile 21, 22 werden vorzugsweise form- und/oder kraftschlüssig mit Verbindungsmitteln 25 zusammengehalten. So definiert die Probe eine ebene Trennfläche 90 zwischen dem ersten Messkammerteil 21 und dem zweiten Messkammerteil 22.

Im ersten Messkammerteil 21 befindet sich ein Wasserbad 31 zur Erzeugung einer wasserdampfgesättigten Zone 32 unterhalb der Probe 9. Um sicherzustellen, dass genügend Wasser zur Verfügung steht, ist es vorteilhaft, einen kommunizierenden Wasserbehälter 4 vorzusehen, welcher über eine Zuführungsleitung 41 mit dem ersten Messkammerteil 21 verbunden ist. Der Wasserbehälter 4 ist zwar mit Verschlussmitteln 42 verschlossen, weist jedoch eine das Nachströmen des Wassers erleichternde (nicht eingezeichnete) Luftleckage auf.

Als Auflage für die Probe 9 ist im ersten Messkammerteil 21 vorzugsweise eine Unterlageplatte 5 aus kapillarem bzw. porösem Material vorhanden, deren Kapillaren bzw. Poren mit Wasserdampf sättigbar sind. Als Material für eine solche Unterlageplatte 5 kommt bspw. ein Schwamm, Bimsstein oder ein Kunststoff wie Polyäthylen in Frage; das letztgenannte Material ist wegen seiner hydrophoben Eigenschaften besonders geeignet. Durch die Kapillaren bzw. Poren der Unterlageplatte 5 soll das Wasser nahe an die Probe 9 herangebracht werden, ohne dass die Probe 9 direkt mit dem Wasser in Kontakt kommt. So ist optimal gewährleistet, dass die dem ersten Messkammerteil 21 zugewandte Probenfläche einer gesättigten Wasserdampfatmosphäre 32 ausgesetzt ist.

Der zweite Messkammerteil 22 weist erfindungsgemäss eine geringe Höhe h von bspw. 5-20 mm auf. Jedenfalls soll der Widerstand der ruhigen Luft im zweiten Messkammerteil 22 bezüglich des zu messenden Dampfes wesentlich kleiner sein als der Widerstand der Probe 9.

Direkt im zweiten Messkammerteil 22 ist ein Feuchtefühler 6 mit einem Substrat 61 und einer aktiven Fläche 62 angebracht, und zwar im Wesentlichen parallel zur Probenfläche 90 und in möglichst geringem Abstand d zu dieser. Der maximal zulässige Abstand dₘₐₓ zwischen dem Feuchtefühler 6 und der Probe 9 ist durch die Forderung gegeben, dass die aktive Fläche 62 des Feuchtefühlers 6 in einer annähernd homogenen Atmosphäre angebracht sein muss. Dies ist bei einer Temperatur von 23 °C der Fall, wenn der Abstand d zwischen Feuchtefühler 6 und Probe 9 nicht grösser als ca. 5 mm ist oder bei 38 °C nicht grösser als ca. 10 mm. Die Abmessungen der aktiven Fläche 62 sollten vergleichbar sein mit denjenigen der Fläche 90 einer Probenseite; vorzugsweise ist die aktive Fläche 62 des Feuchtefühlers 6 im Wesentlichen gleich gross wie die Fläche 90 einer Probenseite. Gemäss den gängigen Normen beträgt letztere Fläche 50 cm², was einer Längsausdehnung (Durchmesser) der Probenfläche 90 von 8.0 cm entspricht.

Die Zufuhr und Abfuhr von Trägergas, vorzugsweise trockener Luft, in den zweiten Messkammerteil 22 erfolgt über Leitungen 71, 72, wobei zumindest die Zuführleitung 71 mittels eines Einlassventils 73 direkt in den zweiten Messkammerteil 22 mündet. Dadurch wird ein Totvolumen zwischen Einlassventil 73 und zweitem Messkammerteil 22, welches durch langsame Nachdiffusion Fehler einbringen würde, vermieden. Auch bei der Einmündung der Abführleitung 72 kann ein analoges Auslassventil vorhanden sein.

Die Zufuhr der trockenen Luft wird vorzugsweise durch Strömungsleitelemente 74, bspw. eine Prallplatte, so gestaltet, dass ein Einströmen (schematisch dargestellt mit Pfeilen) auf breiter Fläche erfolgt. Dadurch wird der Luftstrom bzw. die Atmosphäre im zweiten Messkammerteil 22 homogenisiert. Dasselbe gilt für die Ausströmung der zu evakuierenden Luft, wobei entsprechende Strömungsleitelemente 75 vorhanden sind.

In einer bevorzugten Ausführungsform ist die aktive Fläche 62 des Feuchtefühlers 6 mit einer teilweise perforierten Abdeckung 65 bedeckt, so dass sie nicht direkt dem Luftstrom ausgesetzt ist. Dadurch wird eine Konzentrationspolarisation im zweiten Messkammerteil 22 vermieden. Die teilweise perforierte Abdeckung 65 kann bspw. als gelochte Abdeckplatte, als gelochte Folie oder als Textil, bspw. aus Nylon, ausgebildet sein.

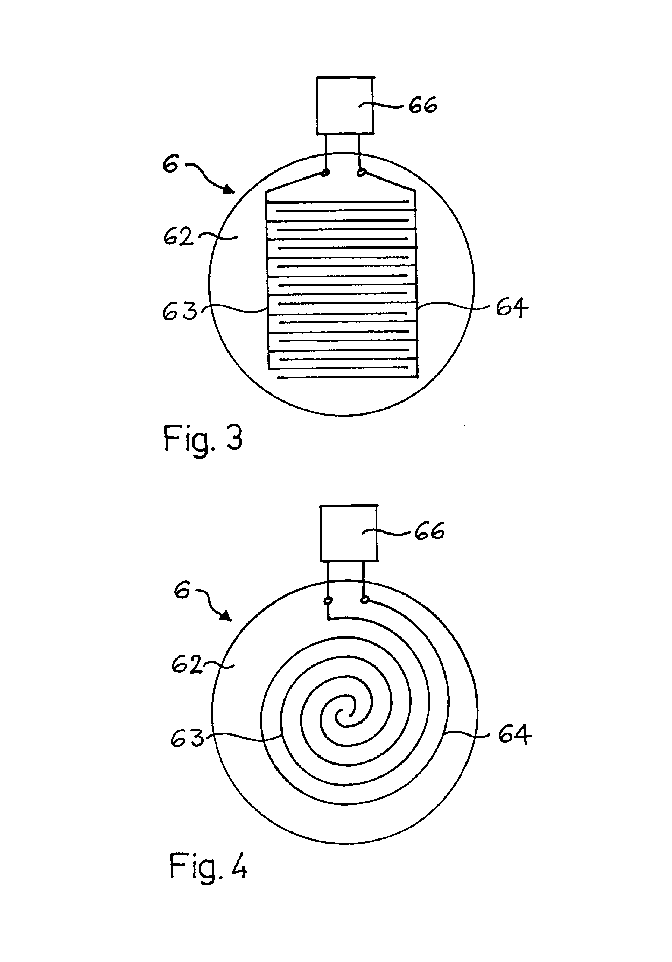

Figuren 3 und 4 zeigen Draufsichten auf zwei Feuchtefühler 6, wie sie in der erfindungsgemässen Vorrichtung zum Einsatz kommen können. Der Feuchtefühler 6 befindet sich auf einem flächigen, elektrisch nicht leitendem Substrat 61, auf dessen Oberfläche 62 zwei Elektroden 63, 64 derart aufgebracht sind, dass ihre einander zugewandten Flächen gross sind und einen kleinen Abstand aufweisen. Die Elektroden 63, 64 der Ausführungsform von **Figur 3** weisen die Form ineinander greifender Kämme auf, diejenigen der Ausführungsform von **Figur 4** die Form ineinander verwickelter Spiralen. Die Feuchtigkeitsmessung erfolgt aufgrund der Kapazitätsänderungen in den durch die beiden Elektroden 63, 64 gebildeten Kondensatoren.

Zur Auswertung, insbesondere zur Linearisierung und Kalibrierung, von Ausgangssignalen des Dampffühlers 6 sind Auswertemittel 66, vorzugsweise ein anwenderspezifischer integrierter Schaltkreis (ASIC), vorhanden.

### Bezugszeichenliste:

- 1: Messvorrichtung

- 2: Messkammer
- 21, 22: erster, zweiter Messkammerteil
- 23: Auflagefläche
- 24: O-Ring
- 25: Verbindungsmittel

- 31: Flüssigkeitsbad
- 32: gesättigte Dampfatmosphäre

- 4: kommunizierender Flüssigkeitsbehälter
- 41: Zuführungsleitung
- 42: Verschlussmittel

- 5: Unterlageplatte

- 6: Dampffühler
- 61: Substrat
- 62: aktive Fläche
- 63, 64: erste, zweite Elektrode
- 65: perforierte Abdeckung
- 66: Auswertemittel

- 71: Trägergaseinlass
- 72: Trägergasauslass
- 73: Ventil
- 74, 75: Strömungsleitelemente

- 9: Probe
- 90: Trennfläche

## Patentansprüche

1. Vorrichtung (1) zur Messung der Dampfdurchlässigkeit eines flächigen Produktes (9) wie bspw. einer Folie oder Membran, beinhaltend
eine zweiteilige Messkammer (2) mit Haltemitteln (23-25) zur dichtenden Halterung des flächigen Produktes (9), welche Haltemittel (23-25) derart gestaltet sind, dass das gehaltene flächige Produkt (9) eine ebene Trennfläche (90) zwischen einem ersten Messkammerteil (21) und einem zweiten Messkammerteil (22) definiert, wobei
der erste Messkammerteil (21) zur Aufnahme einer Flüssigkeit (31) ausgebildet ist und der zweite Messkammerteil (22) Mittel (71-73) zum Einlass und Auslass eines Trägergases aufweist,
**dadurch gekennzeichnet, dass**
ein Dampffühler (6) mit einer eben ausgebildeten aktiven Fläche (62) im zweiten Messkammerteil (22) angebracht ist, welche aktive Fläche (62) parallel zur und in unmittelbarer Nähe (d) der Trennfläche (90) zwischen den beiden Messkammerteilen (21, 22) liegt und vergleichbar gross ist wie diese Trennfläche (90), und
die Höhe (h) des zweiten Messkammerteils (22), gemessen von einem beliebigen Punkt der Trennfläche (90) aus senkrecht zur Trennfläche (90), wesentlich kleiner ist als die Ausdehnung der Trennfläche (90).

2. Vorrichtung (1) nach Anspruch 1, wobei der Abstand (d) zwischen dem Dampffühler (6) und der Trennfläche (90) derart klein ist, dass der Dampffühler (6) in einer annähernd homogenen Atmosphäre von durch die Probe (9) durchgetretenem Dampf angebracht ist, der Abstand (d) vorzugsweise kleiner als 10 mm ist und in einer bevorzugten Ausführungsform kleiner oder gleich 5 mm ist.

3. Vorrichtung (1) nach Anspruch 1 oder 2, wobei die Höhe (h) des zweiten Messkammerteils (22) derart klein ist, dass der Widerstand der ruhigen Luft im zweiten Messkammerteil (22) bezüglich des zu messenden Dampfes wesentlich kleiner ist als der Widerstand der Probe (9), vorzugsweise fünf- bis zwanzigmal kleiner ist als die Ausdehnung des zweiten Messkammerteils (22) in Längsrichtung, und in einer bevorzugten Ausführungsform 5-20 mm beträgt.

4. Vorrichtung (1) nach einem der vorangehenden Ansprüche, beinhaltend einen anwenderspezifischen integrierten Schaltkreis (66) zur Auswertung, insbesondere zur Linearisierung und Kalibrierung, von Ausgangssignalen des Dampffühlers (6).

5. Vorrichtung (1) nach einem der vorangehenden Ansprüche, wobei der Dampffühler (6) ein flächiges, elektrisch nicht leitendes Substrat (61) beinhaltet, auf dessen Oberfläche (62) zwei Elektroden (63, 64) mit einander zugewandten Flächen aufgebracht sind, welche Elektroden (63, 64) vorzugsweise die Form ineinander greifender Kämme oder ineinander verwickelter Spiralen aufweisen.

6. Vorrichtung (1) nach einem der Ansprüche 1-4, wobei der Dampffühler (6) eine auf einem Substrat aufgebrachte dünne Aluminiumoxidschicht beinhaltet, deren Basis eine erste Elektrode bildet, während eine zweite Elektrode eine auf der Aluminiumoxidschicht befindliche poröse Metallschicht beinhaltet.

7. Vorrichtung (1) nach einem der vorangehenden Ansprüche, wobei die aktive Fläche (62) des Dampffühlers (6) durch eine teilweise perforierte Abdeckung (65), bspw. eine gelochte Abdeckplatte, eine gelochte Folie oder ein Textil, vorzugsweise aus Nylon, abgedeckt ist.

8. Vorrichtung (1) nach einem der vorangehenden Ansprüche, wobei die Mittel (71-73) zum Einlass und Auslass eines Trägergases ein Ventil beinhalten, welches direkt in eine Wand des zweiten Messkammerteils (22) eingebaut ist.

9. Vorrichtung (1) nach einem der vorangehenden Ansprüche, wobei im zweiten Messkammerteil (22) Strömungsleitelemente (74, 75) zur Homogenisierung des Trägergases bzw. der Atmosphäre im zweiten Messkammerteil (22) vorhanden sind.

10. Vorrichtung (1) nach einem der vorangehenden Ansprüche, wobei im ersten Messkammerteil (21) als Auflage für die Probe eine Unterlageplatte (5) aus kapillarem bzw. porösem Material vorhanden ist, deren Kapillaren bzw. Poren mit Wasserdampf sättigbar sind und die vorzugsweise aus einem schwammartigen Material, aus Bimsstein oder aus einem Kunststoff wie z. B. Polyäthylen besteht.

11. Vorrichtung (1) nach einem der vorangehenden Ansprüche, wobei die Vorrichtung (1) einen kommunizierenden Flüssigkeitsbehälter (4) beinhaltet, welcher über eine Zuführungsleitung (41) mit dem ersten Messkammerteil (21) verbunden ist.

12. Vorrichtung (1) nach einem der vorangehenden Ansprüche, wobei die Haltemittel (23-25) einen O-Ring (25) beinhalten.
